# EUROPEAN PATENT APPLICATION

(11) **EP 1 892 974 A1**
(43) Date of publication of application: **27.02.2008**
(21) Application number: 06757357.6
(22) Date of filing: 15.06.2006
(51) Int. Cl.: H04Q 7/36, H04B 7/26, H04L 12/28

(54) **SHARED DATA CHANNEL ASSIGNING APPARATUS AND SHARED DATA CHANNEL ASSIGNING METHOD**

(30) Priority: 17.06.2005 JP 2005178542
(71) Applicant: NTT DoCoMo INC., Chiyoda-ku Tokyo 100-6150 (JP)
(72) Inventor: UMESH, Anil, c/o I.P. Dept. NTT DoCoMo, Inc., Tokyo 100-6150 (JP); ISHII, Minami, c/o I.P. Dept. NTT DoCoMo, Inc., Tokyo 100-6150 (JP); NAKAMURA, Takehiro, c/o I.P. Dept. NTT DoCoMo, Inc, Tokyo 100-6150 (JP); SUZUKI, Takashi, c/o I.P. Dept. NTT DoCoMo, Inc., Tokyo 100-6150 (JP)
(74) Representative: HOFFMANN EITLE
(86) International application number: PCT/JP2006/312059
(87) International publication number: WO 2006/135019

(57) **Abstract**

An apparatus for allocating a shared data channel includes: a MAC identifier allocating unit configured to allocate a common MAC identifier to a mobile station in a discontinuous reception state; and a discontinuous reception timing control unit configured to prevent discontinuous reception timings from overlapping among multiple of the mobile stations to which the common MAC identifier is allocated.

## Description

### BACKGROUND OF THE INVENTION

### 1. Field of the Invention

The present invention relates to an apparatus for allocating a shared data channel and a method of allocating a shared data channel.

### 2. Description of the Related Art

In the international standardization organization for the 3rd generation mobile communication system called 3GPP, it has been standardized that a downlink shared data channel is used at a physical layer, and that a scheduler at a MAC layer in a base station adaptively allocates the downlink shared data channel to mobile stations, in order to make efficient use of downlink radio resources. This standard is part of HSDPA (High Speed Downlink Packet Access).

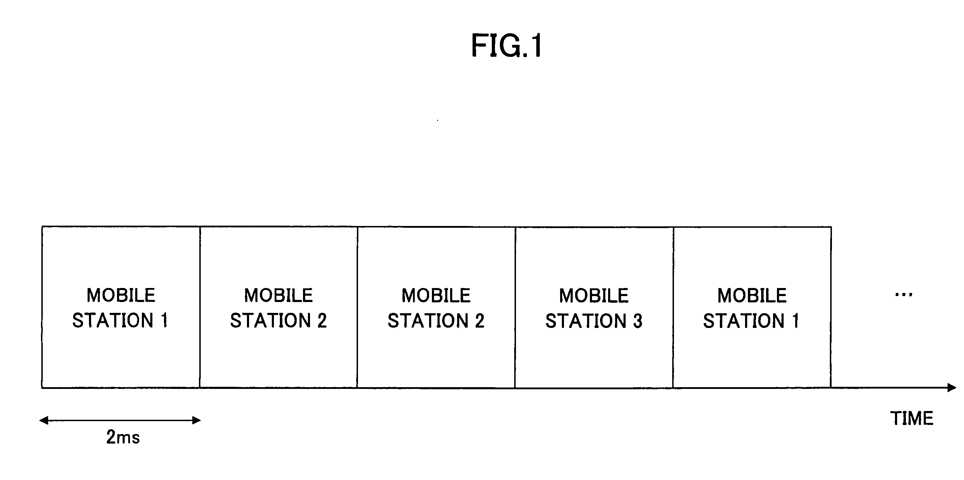

Under HSDPA, as shown in Fig. 1, the scheduler in the base station selects for each subframe (2 ms) a mobile station to which downlink user data is transmitted, and allocates a shared data channel (HS-PDSCH: High Speed Physical Downlink Shared Channel) to the selected mobile station. At this moment, the scheduler may allocate the HS-PDSCH to multiple mobile stations for a single subframe. However, the scheduler usually allocates the HS-PDSCH to a single mobile station for a single subframe.

Although the algorithm for selecting for each subframe a mobile station to which the scheduler allocates the HS-PDSCH is not defined in 3GPP, the scheduler usually takes (1) instantaneous downlink radio quality, (2) required quality of service (QoS), (3) history of allocations, or the like into consideration.

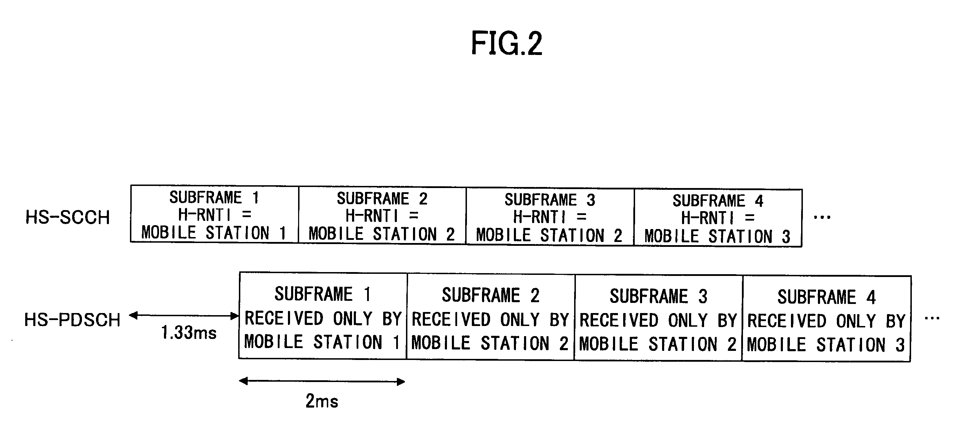

As shown in Fig. 2, the scheduler in the base station inserts MAC identifiers (H-RNTIs), which are allocated in advance to individual mobile stations, into a shared control channel (HS-SCCH: High Speed Shared Control Channel), and notifies each mobile station about to which mobile station the HS-PDSCH is allocated for each subframe. The mobile station receives the HS-SCCH for each subframe, and checks whether the HS-SCCH includes its own H-RNTI allocated to the mobile station. If the HS-SCCH includes its own H-RNTI, the mobile station receives the HS-PDSCH for the corresponding subframe. Otherwise, the mobile station does not receive the HS-PDSCH. It should be noted that the subframe of the HS-SCCH is transmitted 1.33 ms in advance of the subframe of the HS-PDSCH, because the mobile station receives the HS-SCCH and then determines whether it will receive the HS-PDSCH.

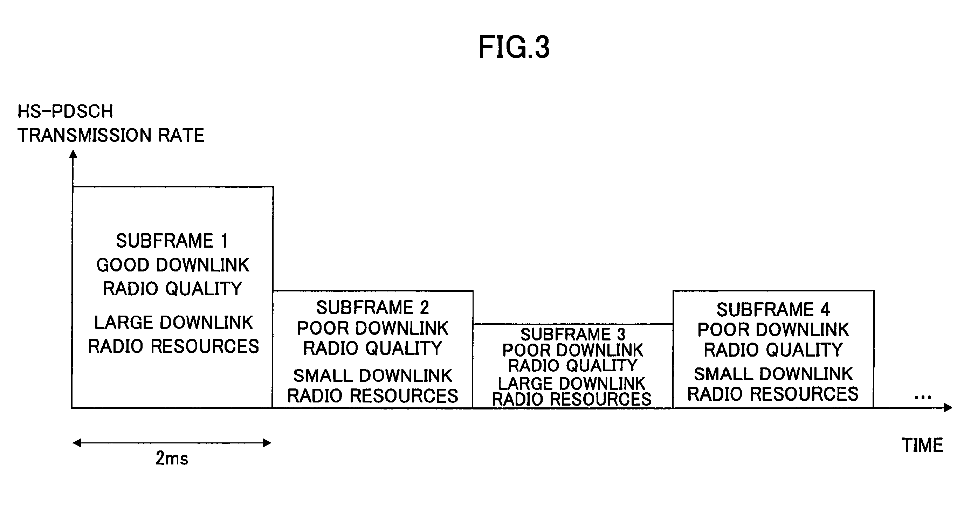

Under HSDPA, AMC (Adaptive Modulation and Coding) is applied to downlink user data transmitted on the HS-PDSCH. As shown in Fig. 3, when AMC is applied, the scheduler in the base station determines the size of user data to be transmitted for the subframe to the mobile station to which the HS-PDSCH is allocated, in consideration of both downlink radio quality for the mobile station and available downlink radio resources. When the downlink radio quality for the mobile station improves or the available downlink radio resources increase, the size of user data to be transmitted for the subframe increases, in other words, the transmission rate becomes higher. As used herein, downlink radio resources under HSDPA mean transmission power in the base station and an orthogonal code (channelization code).

Under HSDPA, downlink user data is transmitted and received on the HS-PDSCH. In addition to the HS-PDSCH, A downlink dedicated channel (DPCH: Dedicated Physical Channel) is established. The DPCH is used for transmitting and receiving control data for the upper layer. Although the HS-PDSCH has to wait for the allocation by the scheduler in the base station, the DPCH can be transmitted and received instantly when data is generated. Therefore, control data for the upper layer is transmitted on the DPCH, because control data may include urgent data such as Hand-Over instructions.

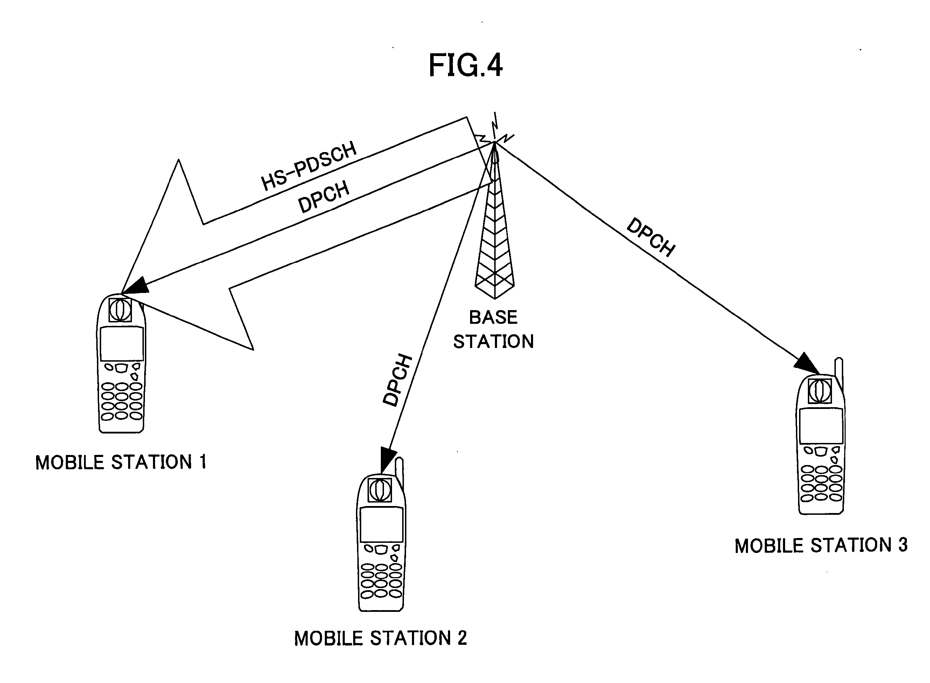

Moreover, the DPCH is also used for transmitting and receiving uplink transmission power control signals. This is because transmission power control has to be performed quickly in a closed loop fashion under HSDPA which applies CDMA (Code Division Multiple Access) to uplink radio access, in order to avoid a Near-Far Problem on the uplink. Therefore, as shown in Fig. 4, the DPCH is established between the base station and every mobile station which receives downlink user data on the HS-PDSCH. In Fig.4, while mobile stations 1-3 wait for the allocation of the HS-PDSCH, the HS-PDSCH is allocated to the mobile station 1.

Under HSDPA, a mobile station which waits for receiving downlink user data on the HS-PDSCH and has the established downlink DPCH is referred to as a mobile station in a CELL_DCH state. Because the downlink DPCH always has to be established between the base station and the mobile station in the CELL_DCH state, the downlink radio resources available for the HS-PDSCH decrease with an increase in the number of the mobile stations in the CELL_DGH state, and thus the transmission rate for downlink user data drops. Accordingly, the mobile station which has less downlink user data usually changes from the CELL_DCH state to the CELL_FACH state.

Transmission and reception of downlink user data for the mobile station in the CELL_FACH state is performed via a common channel (S-CCPCH: Secondary Common Control Physical Channel), to which downlink radio resources are constantly allocated in a cell. Therefore, in contrast to the case of the CELL_DCH state, the base station need not allocate downlink radio resources individually to the mobile station in the CELL_FACH state. Usually, when downlink user data for the mobile station is not generated for a predetermined period of time, the mobile station changes from the CELL_DCH state to the CELL_FACH state. It should be noted that the predetermined period of time lasts on the order of several seconds to several tens seconds.

When downlink user data is generated for the mobile station in the CELL_FACH state, the mobile station changes from the CELL_FACH state to the CELL_DCH state and receives the downlink user data on the HS-PDSCH.

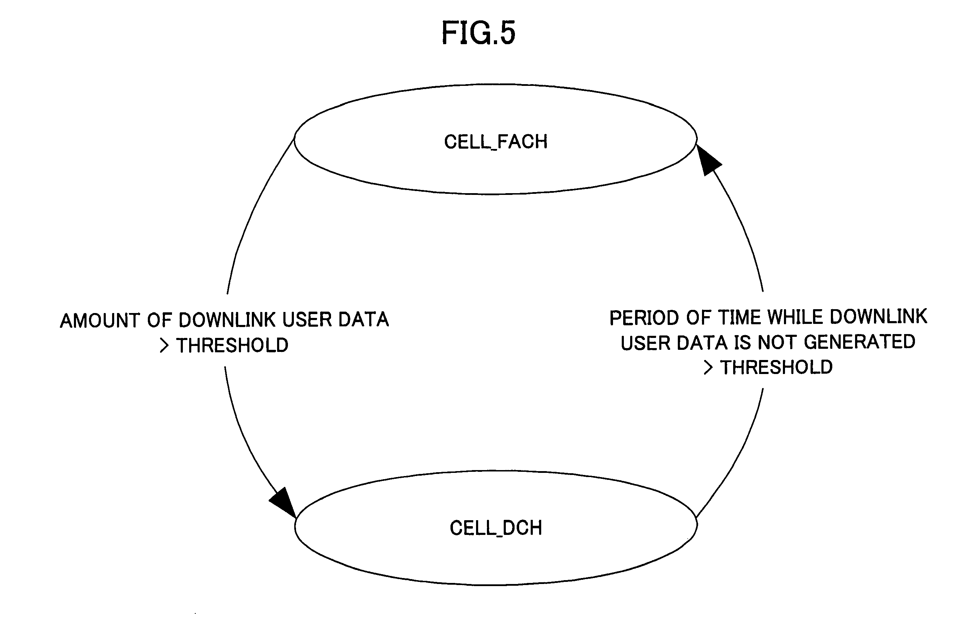

Fig. 5 shows a state transition diagram between the CELL_DCH state and the CELL_FACH state.

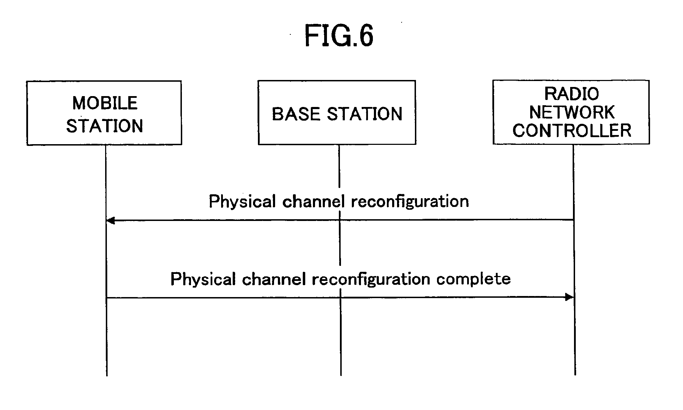

As mentioned above, under HSDPA, the mobile station which has less downlink user data changes from the CELL_DCH state to the CELL_FACH state in a relatively short period of time, in order to maximize downlink radio resources available for the HS-PDSCH. Although this approach maximizes the downlink radio resources available for the HS-PDSCH, some procedures are necessary between a radio network controller which is an upper node of the base station and the mobile station as shown in Fig. 6, because the mobile station changes from the CELL_FACH state to the CELL_DCH state before downlink user data is transmitted on the HS-PDSCH. These procedures are time-consuming.

On the other hand, a communication system employing OFDMA (Orthogonal Frequency Divisional Multiple Access) at a physical layer is standardized in 3GPP under the name of LTE (Long Term Evolution).

Under LTE, AMC is used for the downlink shared channel, as is the case with HSDPA. It is expected that LTE will significantly reduce transmission delay by making the length of a subframe shorter than 2 ms in the case of HSDPA, such as 0.625 ms or 0.5 ms. For this reason, emergency control data for the upper layer can be transmitted on the shared data channel, in contrast to the case of HSDPA.

In addition, under LTE, uplink transmission from each mobile station is controlled not to overlap the others in terms of frequency and time. Thus, the Near-Far Problem which is typical of CDMA-based systems does not arise under LTE. Therefore, uplink transmission power control may be performed in an open loop fashion. Accordingly, the dedicated channel need not be established, and also downlink radio resources allocated to the shared data channel do not decrease with an increase in the number of the mobile stations waiting for the shared data channel. For these reasons, the mobile station which does not receive downlink user data need not change from the CELL_DCH state to the CELL_FACH state under LTE, in contrast to the case of HSDPA. Therefore, transmission and reception can be performed on the downlink shared data channel instantly when downlink user data is generated.

### SUMMARY OF THE INVENTION

### [Problem(s) to be solved by the Invention]

However, the aforementioned related art presents the following problem.

As mentioned above, it is expected under LTE that the number of mobile stations waiting for the downlink shared data channel will grow considerably compared to the case of HSDPA. For this reason, there may be a shortage of mobile station specific MAC identifiers included in the shared control channel to notify the mobile station of the allocation of the downlink shared data channel.

In order to alleviate the shortage of the MAC identifiers, it is possible to merely extend the field length of the MAC identifier. However, extending the field length of the MAC identifier increases the number of signals on the shared control channel, and thus consumes the downlink radio resources available for the shared data channel.

On the other hand, when the mobile station waits for downlink user data on the shared data channel, the mobile station has to continuously receive the shared control channel, which consumes power in the mobile station.

In view of the aforementioned problem, it is a general object of the present invention to provide an apparatus for allocating a shared data channel and a method of allocating a shared data channel, which can avoid a shortage of MAC identifiers and allow only a certain mobile station to receive the shared data channel.

### [Means for solving the Problem]

In one aspect of the present invention, an apparatus for allocating a shared data channel includes:
a MAC identifier allocating unit configured to allocate a common MAC identifier to a mobile station in a discontinuous reception state; and
a discontinuous reception timing control unit configured to prevent discontinuous reception timings from overlapping among multiple of the mobile stations to which the common MAC identifier is allocated.

The apparatus can avoid the shortage of MAC identifiers by allocating the common MAC identifier to multiple mobile stations in the discontinuous reception state, and allow only the certain mobile station to which the common MAC identifier is allocated to receive the shared data channel.

In one aspect of the present invention, a method of allocating a shared data channel includes the steps of:
determining whether a mobile station requests continuous reception or discontinuous reception;
allocating a common MAC identifier to the mobile station in a discontinuous reception state; and
preventing discontinuous reception timings from overlapping among multiple of the mobile stations to which the common MAC identifier is allocated.

The method can avoid the shortage of MAC identifiers by allocating the common MAC identifier to multiple mobile stations in the discontinuous reception state, and allow only the certain mobile station to which the common MAC identifier is allocated to receive the shared data channel.

### [Effect of the Invention]

According to an embodiment of the present invention, an apparatus for allocating a shared data channel and a method of allocating a shared data channel are achieved, which can avoid a shortage of MAC identifiers and allow only a certain mobile station to receive the shared data channel.

### BRIEF DESCRIPTION OF THE DRAWINGS

Fig. 1 shows a diagram for illustrating allocations of a HS-PDSCH by a scheduler in a base station.
Fig. 2 shows a diagram for illustrating notifications of allocations of a HS-PDSCH by means of a HS-SCCH.
Fig. 3 shows a diagram for illustrating AMC on a HS-PDSCH.
Fig. 4 shows a diagram for illustrating that a DPCH is established between a base station and mobile stations waiting for a HS-PDSCH.
Fig. 5 shows a state transition diagram between a CELL_DCH state and a CELL_FACH state.
Fig. 6 shows a procedure for changing a mobile station from a CELL_FACH state to a CELL_DCH state.
Fig. 7 shows a diagram for illustrating discontinuous reception.
Fig. 8 shows a diagram for a shared channel used for transmitting and receiving downlink user data.
Fig. 9 shows a block diagram for illustrating an apparatus for allocating a shared data channel in accordance with an embodiment of the present invention.
Fig. 10 shows a flowchart for illustrating an operation of an apparatus for allocating a shared channel in accordance with an embodiment of the present invention.
Fig. 11 shows a diagram for illustrating discontinuous reception timings among mobile stations in accordance with an embodiment of the present invention.

### DESCRIPTION OF THE PREFERRED EMBODIMENTS

### [Description of Notations]

100 an apparatus for allocating a shared data channel

### [Best Mode of Carrying Out the Invention]

With reference to the accompanying drawings, a description is given below with regard to preferred embodiments of the present invention.

Throughout the drawings for illustrating the embodiments, corresponding elements are referenced by the same reference numerals, and the repetitive descriptions are omitted.

A description is given below with regard to a mobile communication system in accordance with an embodiment of the present invention.

The mobile communication system in accordance with the present embodiment includes a mobile station and an apparatus for allocating a shared data channel.

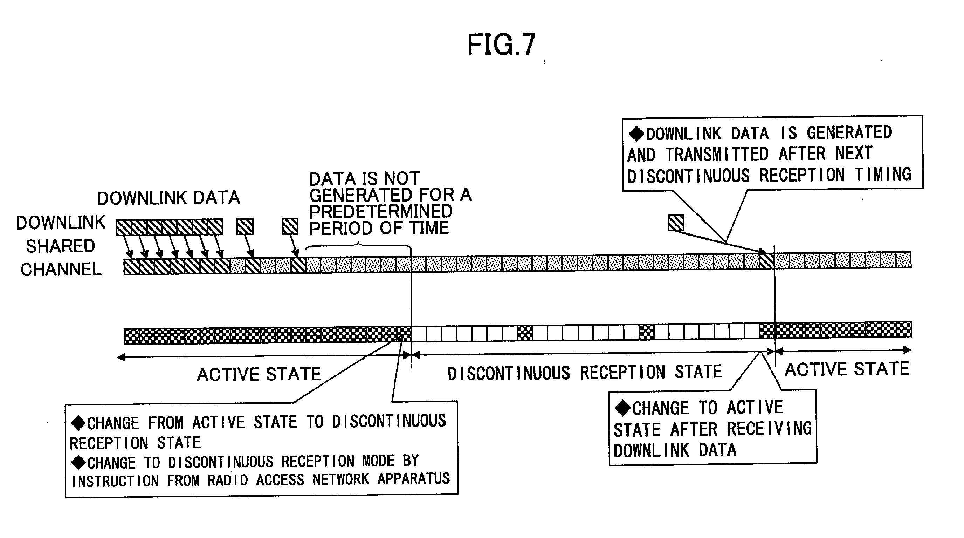

In the mobile communication system in accordance with the present embodiment, the mobile station whose downlink user data is not generated for a predetermined period of time changes to a discontinuous reception (intermittent reception) state at the timing determined between the mobile station and the base station, as shown in Fig. 7.

In discontinuous reception state, the mobile station activates its receiver only for subframes to be received, and deactivates its receiver for the other subframes, thereby reducing power consumption. When the mobile station receives downlink data, the mobile station changes to an active state.

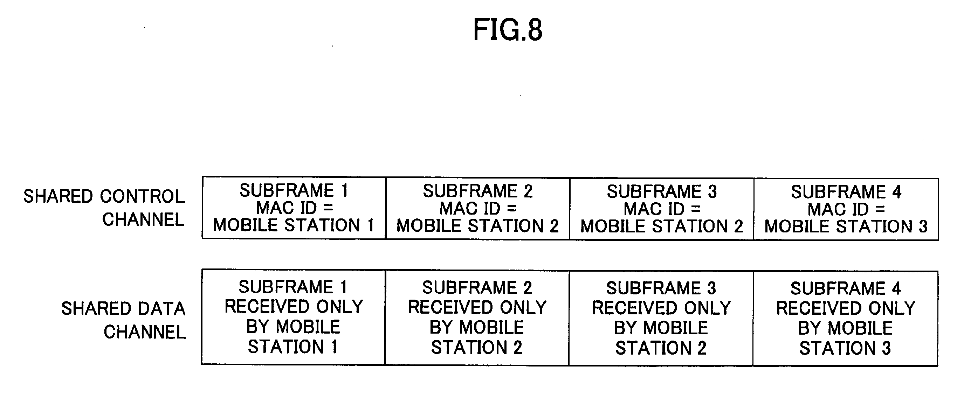

In the mobile communication system in accordance with the present embodiment, the shared data channel is used for transmitting and receiving downlink user data. As shown in Fig. 8, the base station inserts MAC identifiers into a shared control channel, and notifies each mobile station of the allocation of the shared data channel.

For example, the base station includes in each subframe of the shared control channel a MAC identifier for the mobile station to which the shared data channel is allocated. In Fig. 8, the MAC ID for a mobile station 1 is included in subframe 1, the MAC ID for a mobile station 2 is included in subframes 2 and 3, and the MAC ID for a mobile station 3 is included in subframe 4. Consequently, on the shared downlink data channel, subframe 1 can be received by the mobile station 1, subframes 2 and 3 can be received by the mobile station 2, and subframe 4 can be received by the mobile station 3.

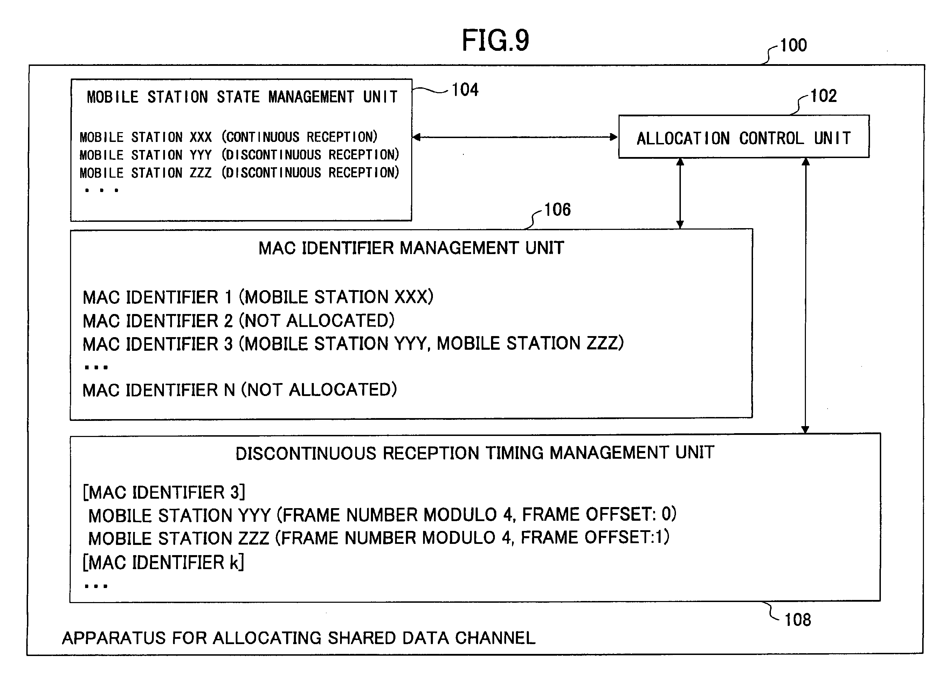

With reference to Fig. 9, a description is given below with regard to an apparatus 100 for allocating a shared data channel in accordance with the present embodiment.

The apparatus 100 for allocating the shared data channel is incorporated into the base station or a radio network controller, for example. The apparatus 100 includes an allocation control unit 102, a mobile station state management unit 104 connected to the allocation control unit 102, a MAC identifier management unit 106 as a MAC identifier allocating unit, and a discontinuous reception timing management unit 108 as a discontinuous reception timing control unit.

The mobile station state management unit 104 monitors whether the mobile station performs continuous reception or discontinuous reception on the shared channel. As shown in Fig. 9, the mobile station state management unit 104 monitors that a mobile station XXX performs continuous reception and mobile stations YYY and ZZZ perform discontinuous reception, for example.

The MAC identifier management unit 106 allocates a mobile station specific MAC identifier to the mobile station performing continuous reception on the shared channel, and allocates a common MAC identifier to the mobile stations performing discontinuous reception. As shown in Fig. 9, the MAC identifier management unit 106 allocates a MAC identifier 1 to the mobile station XXX and a common MAC identifier 3 to the mobile stations YYY and ZZZ, for example. The MAC identifier management unit 106 does not allocate a MAC identifier 2. The MAC identifier management unit 106 may allocate a MAC identifier (cell specific MAC identifier) used in common in each cell where the mobile station is located.

The discontinuous reception timing management unit 108 controls discontinuous reception timings for multiple mobile stations in the discontinuous reception state to be mutually different. For example, the discontinuous reception timing management unit 108 allocates different frame offsets to the multiple mobile stations in the discontinuous reception state to prevent discontinuous reception timings from overlapping among the multiple mobile stations.

As shown in Fig. 9, the discontinuous reception timing management unit 108 determines different frame offsets between the mobile stations YYY and ZZZ to which the common MAC identifier 3 is allocated, for example. As shown in Fig. 9, it is assumed in the present embodiment that the number of mobile stations with the common MAC identifier is equal to 4, and that the discontinuous reception timing is determined by a frame number modulo 4. The reception timing management unit 108 may change the number of mobile stations with the common MAC identifier by changing the value of modulo arithmetic.

The allocation control unit 102 controls each unit in the apparatus 100 for allocating the shared data channel.

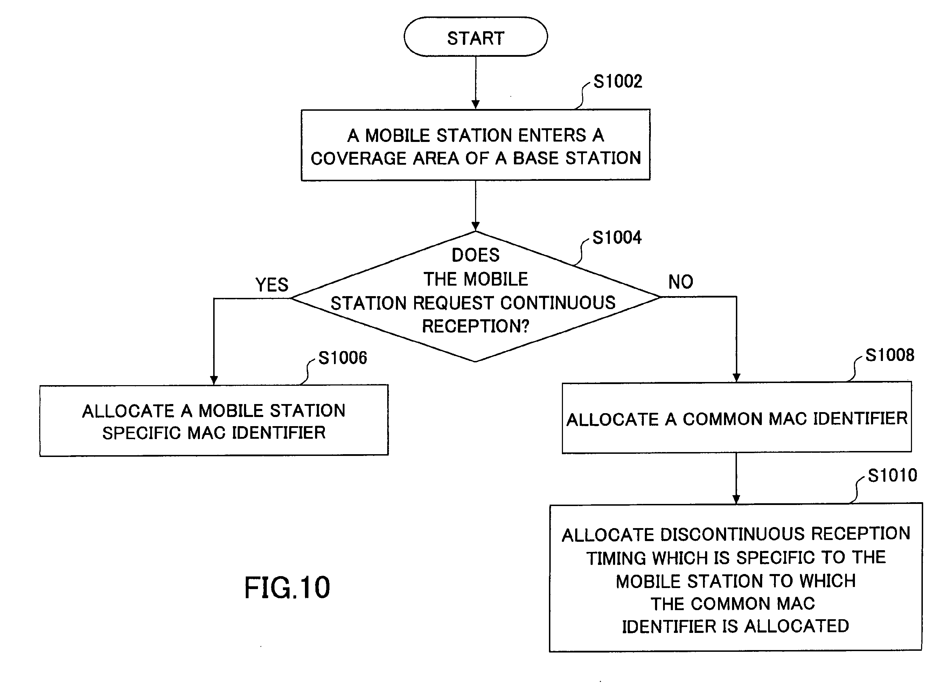

With reference to Fig. 10, a description is given below with regard to an operational flowchart of the apparatus 100 for allocating the shared data channel. In Fig. 10, it is assumed that the apparatus 100 for allocating the shared data channel is incorporated into the base station.

First, the apparatus 100 for allocating the shared data channel recognizes that the mobile station enters a coverage area of the base station (Step S1002).

Then, the mobile station state management unit 104 determines and manages whether the mobile station requests continuous reception or discontinuous reception. For example, the mobile station state management unit 104 determines whether the mobile station requests continuous reception (Step S1004). For example, the mobile station state management unit 104 determines that the mobile station requests continuous reception when there is either an originating call from the mobile station or incoming call to the mobile station. In addition, when the mobile station moves from a coverage area of a neighbor base station, the mobile station state management unit 104 may maintain the state at the neighbor base station.

If the mobile station state management unit 104 determines that the mobile station requests continuous reception (Step S1004: YES), the mobile station state management unit 104 notifies the MAC identifier management unit 106 of the determination. The MAC identifier management unit 106 allocates a mobile station specific MAC identifier, which has not been allocated yet, to the mobile station in response to the notification (Step S1006).

On the other hand, if the mobile station state management unit 104 determines that the mobile station requests discontinuous reception (Step S1004: NO), the mobile station state management unit 104 notifies the MAC identifier management unit 106 of the determination. The MAC identifier management unit 106 allocates a common MAC identifier, which can be allocated to the mobile station in the discontinuous state, to the mobile station in response to the notification (Step S1008). The MAC identifier management unit 106 may individually allocate the common MAC identifier to the mobile station, or may transmit the common MAC identifier in advance as broadcast information.

When the MAC identifier management unit 106 allocates the common MAC identifier to a new mobile station, the MAC identifier management unit 106 notifies the discontinuous reception timing management unit 108 of the allocation. The discontinuous reception timing management unit 108 finds a discontinuous reception timing which does not overlap that for the other mobile stations to which the common MAC identifier is allocated, and notifies the new mobile station of the discontinuous reception timing (Step S1010).

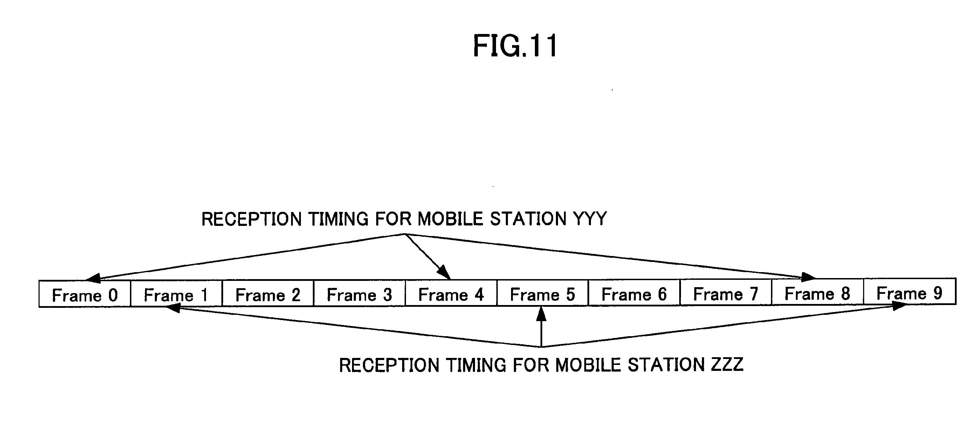

As shown in Fig. 11, the discontinuous reception timing management unit 108 determines a unified discontinuous reception cycle for mobile stations in the discontinuous reception state, and notifies each mobile station of a discontinuous reception frame offset which is specific to each mobile station to which the common MAC identifier is allocated, for example.

As shown in Fig. 11, while the mobile stations YYY and ZZZ have the common MAC ID, they have different discontinuous reception timings. Thus, the base station can allocate the shared data channel to both mobile stations YYY and ZZZ. In addition, the base station may use multiple common MAC identifiers when the number of mobile stations becomes too large to allocate a discontinuous reception timing which is specific to each mobile station.

An apparatus for allocating a shared data channel and a method of allocating a shared data channel in accordance with the present invention are applicable to any mobile communication system.

The present application is based on Japanese Priority Application No. 2005-178542 filed on June 17, 2005 with the Japanese Patent Office, the entire contents of which are hereby incorporated by reference.

## Claims

1. An apparatus for allocating a shared data channel, comprising:
a MAC identifier allocating unit configured to allocate a common MAC identifier to a mobile station in a discontinuous reception state; and
a discontinuous reception timing control unit configured to prevent discontinuous reception timings from overlapping among multiple of the mobile stations to which the common MAC identifier is allocated.

2. The apparatus for allocating the shared data channel as claimed in Claim 1, wherein:
the MAC identifier allocating unit allocates the MAC identifier used in common in each cell where the mobile stations are located.

3. The apparatus for allocating the shared data channel as claimed in Claim 1, wherein:
the MAC identifier allocating unit changes the number of mobile stations to which the common MAC identifier is allocated, based on the number of the mobile stations.

4. The apparatus for allocating the shared data channel as claimed in Claim 1, wherein:
the discontinuous reception timing control unit prevents discontinuous reception timings from overlapping among the multiple of the mobile stations to which the common MAC identifier is allocated, by allocating different frame offsets to the multiple of the mobile stations.

5. A method of allocating a shared data channel, comprising the steps of:
determining whether a mobile station requests continuous reception or discontinuous reception;
allocating a common MAC identifier to the mobile station in a discontinuous reception state; and
preventing discontinuous reception timings from overlapping among multiple of the mobile stations to which the common MAC identifier is allocated.

6. The method of allocating the shared data channel as claimed in Claim 5, wherein:
the step of allocating the common MAC identifier comprises the step of:
allocating the MAC identifier used in common in each cell where the mobile stations are located.

7. The method of allocating the shared data channel as claimed in Claim 5, wherein:
the step of allocating the common MAC identifier comprises the step of:
changing the number of mobile stations to which the common MAC identifier is allocated, based on the number of the mobile stations.

8. The method of allocating the shared data channel as claimed in Claim 5, wherein:
the step of preventing discontinuous reception timings from overlapping comprises the step of:
allocating different frame offsets to the multiple of the mobile stations to which the common MAC identifier is allocated.
